# EUROPÄISCHE PATENTSCHRIFT

(11) **EP 4 673 601 B1**
(45) Veröffentlichungstag und Bekanntmachung des Hinweises auf die Patenterteilung: **18.11.2026**
(21) Anmeldenummer: 24702915.0
(22) Anmeldetag: 30.01.2024
(51) Int. Cl.: D21B 1/32, D21B 1/34

(54) **WASSEREINSPEISUNGSTROMMEL UND FASERSTOFFAUFBEREITUNGSVORRICHTUNG**
WATER FEED DRUM AND FIBRE MATERIAL PROCESSING APPARATUS
TAMBOUR D'ALIMENTATION EN EAU ET APPAREIL DE TRAITEMENT DE MATÉRIAU FIBREUX

(30) Priorität: 28.02.2023 DE 102023104802
(43) Veröffentlichungstag der Anmeldung: 07.01.2026
(73) Patentinhaber: Voith Patent GmbH, 89522 Heidenheim (DE)
(72) Erfinder: BARETH, Christoph, 88436 Eberhardzell (DE); BERGER, Pierre-Haakon, 88212 Ravensburg (DE); SCHUSTER, Sebastian, 88281 Schlier-Oberankenreute (DE)
(74) Vertreter: Voith Patent GmbH - Patentabteilung
(86) Internationale Anmeldenummer: PCT/EP2024/052119
(87) Internationale Veröffentlichungsnummer: WO 2024/179760

(56) Entgegenhaltungen:
- EP-A1- 0 194 332
- EP-A1- 3 892 773

## Beschreibung

Die Erfindung betrifft eine Wassereinspeisungstrommel zum Zugeben von Wasser zum Verdünnen von aufgelösten Faserstoffen, insbesondere mit hohen Stoffdichten im HC-Bereich, und eine Faserstoffaufbereitungsvorrichtung zum Auflösen und Sortieren von Faserstoffen.

Für die Aufbereitung von Faserstoffen wie insbesondere Altpapier werden Auflösungsvorrichtungen und Sortiervorrichtungen eingesetzt. Bei den Altpapierauflösesystemen werden neben der Zerfaserung des Karton- und Papierrohstoffes auch die darin enthaltenen groben, nicht verwertbaren Bestandteile wie Kunststoffe oder Glas aus dem Prozess entfernt, die als Rejekte bezeichnet werden.

Auflösungsvorrichtungen werden zur Bearbeitung von Faserrohstoffen eingesetzt, damit diese in Form einer Faserstoffsuspension beispielsweise in einer Maschine zur Herstellung einer Faserstoffbahn, insbesondere einer Papierbahn, verwendet werden können. Typischerweise beträgt die Stoffdichte des in der Fasersuspension aufgelösten Faserstoffs 18 - 20 %. Nach dem Auflösen wird die faserstoffhaltige Suspension mittels einer Nasssiebung sortiert, um faserfremde Verunreinigungen aufgrund ihrer Größe an einem Sieb zurückzuhalten und diese dann abzuscheiden. Die verwertbaren Fasern können dann als Gutstoff mit einem Teil des Wassers die Sieböffnungen passieren.

Durch die Veränderungen in der Altpapierzusammensetzung aufgrund eines deutlichen Anstiegs des Rejektanteils und der Recyclingquote wird für die Auflösung und die erste Grobsortierung von Faserstoffen zunehmend eine Auflösetrommel verwendet. Für die Sortierung des aufgelösten Faserstoffs werden wiederum Sortiertrommeln mit einem perforierten Trommelkörper verwendet, die sich durch niedrige Wartungskosten, einen geringen Verschleiß, eine einfache Bedienung sowie die Vereinzelung von schwer auflösbaren Rohstoffen auszeichnen. Für die Sortierung wird die Faserstoffsuspension weiter mit Wasser verdünnt, um den Faserstoff von den Störstoffen getrennt auszuwaschen. Die Zugabe von Wasser erfolgt in der Sortiertrommel mittels eines Spritzrohres, das axial im Außenbereich der Sortiertrommel angeordnet ist und Wasser über eine Vielzahl von Düsen in den perforierten Trommelkörper einspeist. Im Innenbereich des Trommelkörpers wird der Faserstoff dann verdünnt und anschließend ausgewaschen. Während der Umdrehungen des Trommelkörpers wird das Wasser entweder an der Innenfläche des Trommelkörpers reflektiert oder läuft durch die Perforierungen und wird in einem Aufnahmebehälter aufgefangen.

Für eine effizierte Sortierung ist eine Faserstoffdichte von unter 10 % in der Faserstoffsuspension erforderlich. Um jedoch die Reduzierung der anfänglichen Stoffdichte der Faserstoffsuspension von 18 - 20 % im Eingangsbereich der Sortiertrommel auf 10 - 12 % zu erreichen, ist eine Trommellänge der Sortiertrommel erforderlich, die mehrere Meter umfasst. Dies bedeutet jedoch, dass die gesamte Fläche der Sortiertrommel nicht optimal genutzt wird.

Die EP 3 892 773 A1 offenbart eine Vorrichtung zum Zugeben von Verdünnungswasser am Ende des Auflösebereichs einer Auflösetrommel. Die Vorrichtung umfasst eine Ringnut, die um den Auflösebereich der Auflösetrommel angeordnet ist, wobei der Nutboden der Ringnut die Außenwand der Auflösetrommel bildet und zwei gegenüberliegende Ringnutwände entlang der Radialrichtung der Auflösetrommel nach außen ragen. Von der Ringnut aus ragen mehrere gekrümmte Rohre ins Innere der Auflösetrommel, wobei die radial auf der inneren Seite befindliche Öffnung jedes gekrümmten Rohrs gegen die Drehrichtung der Auflösetrommel ausgerichtet ist. Die Ringnut wird durch eine Ringnutabdeckung, die fest angeordnet ist, abgedeckt. Eine Zufuhrleitung und eine Ablassleitung für das Verdünnungswasser mündet in die Ringnutabdeckung.

Die der Erfindung zu Grunde liegende Aufgabe besteht nun darin, eine Wassereinspeisungstrommel zum Zugeben von Wasser zum Verdünnen von aufgelösten Faserstoffen, insbesondere für Altpapier, zu schaffen, mit der die Verdünnung der Faserstoffsuspension nach dem Auflösungsvorgang für eine wirksame Sortierung effizient, schnell, sicher und störungsfrei durchgeführt werden kann. Insbesondere soll auf einem kurzen Transportweg eine Verringerung der Stoffdichte der aufgelösten Faserstoffsuspension auf 10-12 % erreicht werden, um den Bearbeitungsweg für die Sortierung in der Sortiertrommel zu verlängern.

Diese Aufgabe wird erfindungsgemäß hinsichtlich einer Wassereinspeisungstrommel durch die Merkmale des Patentanspruchs 1 und hinsichtlich einer Faserstoffaufbereitungsvorrichtung durch die Merkmale des Patentanspruchs 9 gelöst. Die weiteren Ansprüche betreffen bevorzugte Ausgestaltungen der Erfindung.

Gemäß einem ersten Aspekt stellt die Erfindung eine Wassereinspeisungstrommel mit einem Wasserzuführungssystem zum Durchmischen einer vorzugsweise in einer Auflösetrommel aufgelösten Faserstoffsuspension mit eingespeistem Wasser bereit. Die Faserstoffsuspension enthält insbesondere Faserstoff mit hohen Stoffdichten im HC-Bereich wie Altpapier und ist in einem Eingangsbereich in die Wassereinspeisungstrommel einströmbar. Das Wasserzuführungssystem umfasst zumindest einen Wasserkanal mit einer Wasseraufnahmekammer und einem sich an die Wasseraufnahmekammer anschließenden Strömungskanal, wobei die Wasseraufnahmekammer in einem Ausgangsbereich angeordnet ist und der Strömungskanal in einen Umlenkbereich mündet, wodurch ein labyrinthartiges Wassertransportsystem ausgebildet ist, in dem das Wasser aus der Wasseraufnahmekammer in den Strömungskanal fließt, durch den Strömungskanal in einer Gegenrichtung zur Strömungsrichtung der Faserstoffsuspension strömt und in dem Umlenkungsbereich in die Strömungsrichtung der Faserstoffsuspension umgelenkt wird.

Durch die erfindungsgemäße Wassereinspeisungstrommel wird das Wassers nicht direkt in die Faserstoffsuspension eingespeist, sondern es findet erst dann eine Durchmischung der Faserstoffsuspension mit Wasser statt, nachdem das eingespeiste Wasser die Wasseraufnahmekammer, den Strömungskanal und den Umlenkbereich durchströmt hat. Hierdurch kann die Strömungsgeschwindigkeit des Wassers deutlich erhöht werden, so dass die Effizienz der Durchmischung gesteigert werden kann. Darüber hinaus wird durch die labyrinthartige Ausbildung des Wasserzuführungssystem verhindert, dass dieses mit der Faserstoffsuspension verunreinigt werden kann, da aufgrund der unterschiedlichen Strömungsrichtungen des zugeführten Wassers und der Faserstoffsuspension ein Zurückströmen der Faserstoffsuspension in die Strömungskanäle wirksam unterbunden wird. Insgesamt wird der Sortierungsprozess der Faserstoffsuspension deutlich verbessert, da bereits in einem frühen Verfahrensstadium eine Verdünnung der Faserstoffsuspension auf eine Sortierstoffdichte in einem Bereich von 10-12% erfolgen kann.

In einer Weiterentwicklung ist vorgesehen, dass der Strömungskanal U-förmig ausgebildet ist und ein Gefälle gegenüber einer axialen Rotationsachse (RA) der Wassereinspeisungstrommel aufweist. Hierdurch wird die Strömung des Wassers wirksam gefördert.

In einer Ausführungsform ist vorgesehen, dass die Wasseraufnahmekammer für die Zuführung des Wassers einen Perforationsbereich mit Perforationen aufweist, durch welche das Wasser in die Wasseraufnahmekammer einfach und effizient radial eingeleitet werden kann.

In einer weiteren Ausführungsform ist vorgesehen, dass ein Bodenbereich der Wasseraufnahmekammer gegenüber der axialen Rotationsachse (RA) der Wassereinspeisungstrommel abgeschrägt ausgebildet ist, so dass eine Umlenkung des Wassers aus einer radialen Richtung in eine axiale Richtung erfolgen kann.

Insbesondere ist vorgesehen, dass ein Schutzelement vorgesehen ist, um die Öffnung des Umlenkbereichs vor Verunreinigungen durch die Faserstoffsuspension zu schützen.

In einer vorteilhaften Ausführungsform ist vorgesehen, dass das Wasserzuführungssystem eine Mehrzahl von Wasserkanälen aufweist, die kranzförmig an einer Innenfläche eines Außenmantels der Wassereinspeisungstrommel angeordnet sind. Hierdurch erfolgt die Einspeisung des Wassers gleichmäßig verteilt über die gesamte Innenfläche der Wassereinspeisungstrommel und es kann eine hohe Wasserzufuhr erreicht werden.

**In** einer weiteren Ausführungsform ist eine erste Schottwand mit einer Durchgangsöffnung für die in die Wassereinspeisungstrommel einströmende Faserstoffsuspension und eine zweite Schottwand mit einer Durchgangsöffnung für die ausströmende Faserstoffsuspension vorgesehen. Hierdurch kann eine einfache Kopplung an eine Auflösetrommel auf der Eingangsseite der Wassereinspeisungstrommel und an eine Sortiertrommel auf der Ausgangsseite der Wassereinspeisungstrommel erfolgen. Zudem wird durch die Durchgangsöffnung der ersten Schottwand die einströmende Faserstoffsuspension in den Bereich der Wasserdurchmischung geleitet und das Wasserzuführungssystems vor Verunreinigungen geschützt. Durch die Durchgangsöffnung der zweiten Schottwand wird die mit Wasser durchmischte Fasersuspension aus der Wassereinspeisungskammer geführt und das Wasserzuführungssystems vor Verunreinigungen geschützt.

Vorteilhafterweise sind Wasserkanäle zwischen der ersten Schottwand und einer dritten kreisförmig ausgebildeten Schottwand angeordnet, wodurch die Stabilität des Wasserzuführungssystems erhöht wird.

Gemäß einem zweiten Aspekt stellt die Erfindung eine Faserstoffaufbereitungsvorrichtung zum Auflösen und Sortieren von Faserstoffen, insbesondere Faserstoff mit hohen Stoffdichten im HC-Bereich wie Altpapier, bereit. Die Faserstoffaufbereitungsvorrichtung umfasst zumindest eine Auflösetrommel mit einem Trommelkörper zum Auflösen von Faserstoff in einer Faserstoffsuspension und eine mit der Auflösetrommel direkt oder indirekt gekoppelte Sortiertrommel mit einem zumindest teilweise perforierten Trommelkörper zum anschließenden Sortieren der Faserstoffsuspension zur Trennung in einen Gutstoff und in ein Rejekt. Erfindungsgemäß ist vorgesehen, dass zwischen der Auflösetrommel und der Sortiertrommel eine Wassereinspeisungstrommel mit einem Wasserzuführungssystem angeordnet ist zur Durchmischung der in der Auflösetrommel aufgelösten Faserstoffsuspension mit eingespeistem Wasser, wobei das Wasserzuführungssystem zumindest einen Wasserkanal mit einer Wasseraufnahmekammer und einem sich an die Wasseraufnahmekammer anschließenden Strömungskanal umfasst, wobei die Wasseraufnahmekammer in einem Ausgangsbereich angeordnet ist und der Strömungskanal in einen Umlenkbereich mündet, wodurch ein labyrinthartiges Wassertransportsystem ausgebildet ist, in dem das Wasser aus der Wasseraufnahmekammer in den Strömungskanal fließt, durch den Strömungskanal in einer Gegenrichtung zur Strömungsrichtung der Faserstoffsuspension strömt und in dem Umlenkungsbereich in die Strömungsrichtung der Faserstoffsuspension umgelenkt wird.

Durch die erfindungsgemäße Faserstoffaufbereitungsvorrichtung wird das Wassers nicht direkt in die Faserstoffsuspension eingespeist, sondern es findet erst dann eine Durchmischung der Faserstoffsuspension mit Wasser statt, nachdem das eingespeiste Wasser die Wasseraufnahmekammer, den Strömungskanal und den Umlenkbereich durchströmt hat. Hierdurch kann die Strömungsgeschwindigkeit des Wassers deutlich erhöht werden, so dass die Effizienz der Durchmischung gesteigert werden kann. Darüber hinaus wird durch die labyrinthartige Ausbildung des Wasserzuführungssystem verhindert, dass dieses mit der Faserstoffsuspension verunreinigt werden kann, da aufgrund der unterschiedlichen Strömungsrichtungen des zugeführten Wassers und der Faserstoffsuspension ein Zurückströmen der Faserstoffsuspension in die Strömungskanäle wirksam unterbunden wird. Insgesamt wird der Sortierungsprozess der Faserstoffsuspension deutlich verbessert, da bereits in einem frühen Verfahrensstadium eine Verdünnung der Faserstoffsuspension auf eine Sortierstoffdichte in einem Bereich von 10-12% erfolgen kann.

In einer Weiterentwicklung ist vorgesehen, dass der Strömungskanal U-förmig ausgebildet ist und ein Gefälle gegenüber einer axialen Rotationsachse (RA) der Wassereinspeisungstrommel aufweist. Hierdurch wird die Strömung des Wassers wirksam gefördert.

In einer Ausführungsform ist vorgesehen, dass die Wasseraufnahmekammer für die Zuführung des Wassers einen Perforationsbereich mit Perforationen aufweist, durch welche das Wasser in die Wasseraufnahmekammer einfach und effizient radial eingeleitet werden kann.

Insbesondere entspricht die Ausbildung des Perforationsbereich der Ausbildung des perforierten Außenmantels der Sortiertrommel, da hierdurch die Fertigung und die Montage der Faserstoffaufbereitungsvorrichtung vereinfacht wird.

**In** einer weiteren Ausführungsform ist vorgesehen, dass ein Bodenbereich der Wasseraufnahmekammer gegenüber der axialen Rotationsachse (RA) der Wassereinspeisungstrommel abgeschrägt ausgebildet ist, so dass eine Umlenkung des Wassers aus einer radialen Richtung in eine axiale Richtung erfolgen kann.

Insbesondere ist vorgesehen, dass ein Schutzelement vorgesehen ist, um die Öffnung des Umlenkbereichs vor Verunreinigungen durch die Faserstoffsuspension zu schützen.

**In** einer vorteilhaften Ausführungsform ist vorgesehen, dass das Wasserzuführungssystem eine Mehrzahl von Wasserkanälen aufweist, die kranzförmig an einer Innenfläche eines Außenmantels der Wassereinspeisungstrommel angeordnet sind. Hierdurch erfolgt die Einspeisung des Wassers gleichmäßig verteilt über die gesamte Innenfläche der Wassereinspeisungstrommel und es kann eine hohe Wasserzufuhr erreicht werden.

**In** einer weiteren Ausführungsform ist zwischen der Auflösetrommel und der Wassereinspeisungstrommel eine erste Schottwand mit einer Durchgangsöffnung für die in die Wassereinspeisungstrommel einströmende Faserstoffsuspension vorgesehen ist, wobei zwischen der Wassereinspeisungstrommel und der Sortiertrommel eine zweite Schottwand mit einer Durchgangsöffnung für die ausströmende Faserstoffsuspension vorgesehen ist. Hierdurch ist eine einfache Kopplung der Auflösetrommel an die Eingangsseite der Wassereinspeisungstrommel und der Sortiertrommel an die Ausgangsseite der Wassereinspeisungstrommel gewährleistet. Zudem wird durch die Durchgangsöffnung der ersten Schottwand die einströmende Faserstoffsuspension in den Bereich der Wasserdurchmischung geleitet und das Wasserzuführungssystems vor Verunreinigungen geschützt. Durch die Durchgangsöffnung der zweiten Schottwand wird die mit Wasser durchmischte Fasersuspension aus der Wassereinspeisungskammer geführt und das Wasserzuführungssystems vor Verunreinigungen geschützt.

Vorteilhafterweise sind die Wasserkanäle zwischen der ersten Schottwand und einer dritten kreisförmig ausgebildeten Schottwand angeordnet, wodurch die Stabilität des Wasserzuführungssystems erhöht wird.

Nachfolgend wird die Erfindung anhand von in der Zeichnung dargestellten Ausführungsbeispielen näher erläutert.

Dabei zeigt:
- Figur 1: eine schematische Darstellung einer Faserstoffaufbereitungsvorrichtung nach dem Stand der Technik;
- Figur 2: eine schematische Schnittdarstellung einer Faserstoffaufbereitungsvorrichtung mit einer erfindungsgemäßen Wassereinspeisungstrommel;
- Figur 3: eine schematische Darstellung der erfindungsgemäßen Faserstoffaufbereitungsvorrichtung in einer Draufsicht;
- Figur 4: eine perspektivische Innenansicht der Wassereinspeisungstrommel mit einem Wasserzuführungssystem;
- Figur 5: eine Schnittdarstellung durch das Wasserzuführungssystem aus Fig. 4;
- Figur 6: eine perspektivische Draufsicht auf eine erste Schottwand;
- Figur 7: eine perspektivische Draufsicht auf eine zweite Schottwand;
- Figur 8: eine Draufsicht auf eine dritte Schottwand.

Zusätzliche Kennzeichen, Aspekte und Vorteile der Erfindung oder ihrer Ausführungsbeispiele werden durch die ausführliche Beschreibung in Verbindung mit den Ansprüchen ersichtlich.

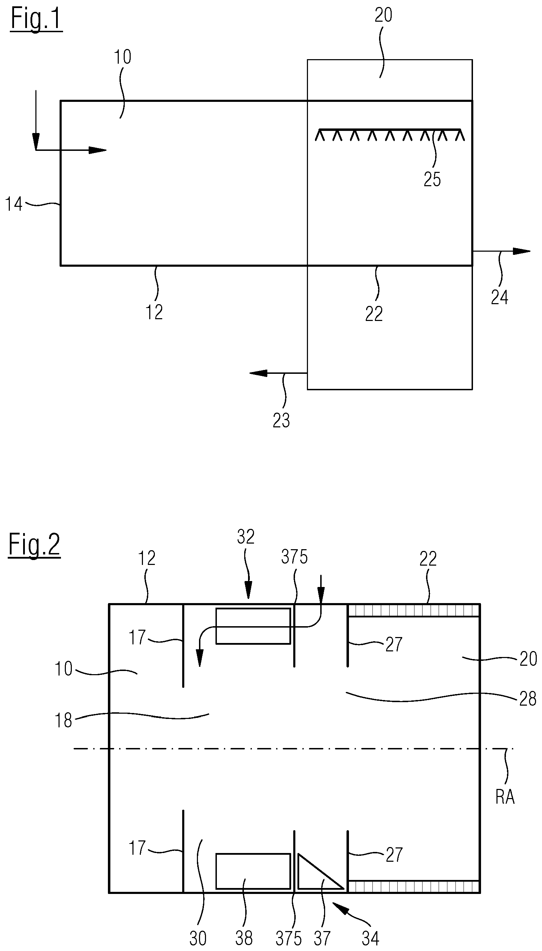

**In** Fig. 1 ist eine Faserstoffaufbereitungsvorrichtung 100 zum Auflösen und Sortieren von Faserstoff gemäß dem Stand der Technik schematisch dargestellt. Die Faserstoffaufbereitungsvorrichtung 100 ist zum Auflösen von Faserstoffen mit hohen Stoffdichten im HC-Bereich (engl. high consistency), insbesondere von Altpapierstoffen mit einem hohen Rejektanteil, geeignet. Die Faserstoffaufbereitungsvorrichtung 100 umfasst eine Auflösetrommel 10 und eine Sortiertrommel 20, die in einer einteiligen oder auch zweiteiligen Konstruktion ausgebildet sein können.

Die Auflösetrommel 10 umfasst einen Trommelkörper 12, in den der Faserstoff üblicherweise in Form von Ballen in einem Eingangsbereich 14 zugeführt wird. Durch die Umdrehungen der Auflösetrommel 10 in Verbindung mit innenseitig angeordneten Hebeelementen wird die Faserstoffsuspension nach oben gefördert und fällt dann wieder auf den Boden des Trommelkörpers 12 zurück. Durch die dabei auftretenden mechanischen Kräfte auf den Faserstoff kann dieser aufgelöst werden. Durch den sich drehenden Trommelkörper 12 wird ein kontinuierlicher Auflösungsprozess erreicht, der zu einer effektiven Materialausnutzung und einer gleichmäßigen und stabilen Verarbeitung des Faserstoffs führt. Insbesondere ist eine stippenfreie Auflösung für HC-Faserstoffe und schwer auflösbare Rohstoffe möglich, die gegebenenfalls durch eine Durchführung der Auflösung bei höheren Temperaturen und/oder eine Zugabe von Chemikalien unterstützt wird. Durch die Rotation des Trommelkörpers 12 wird ein schonendes Durchmischen und Verkneten des Faserstoffs erreicht, da auf die noch zu vereinzelnden Bestandteile des Faserstoffs ausreichend hohe Scherkräfte ausgeübt werden, um den Faserstoff energieeffizient auflösen zu können.

An die Auflösetrommel 10 schließt sich die Sortiertrommel 20 an. Die Sortiertrommel 20 umfasst einen Trommelkörper 22, der mit Perforationen versehen ist. Durch die Perforationen kann ein Teil der der Sortiertrommel 20 aus der Auflösetrommel 10 zugeführten Faserstoffsuspension als Gutstoff 23 passieren, während ein anderer Teil der Faserstoffsuspension von den Perforationen als Rejekt 24 zurückgehalten wird. Eine Trennung der Fasern von Störstoffen findet wiederum durch die Umdrehung des Trommelkörpers 22 in Verbindung mit innenseitig angeordneten Hebeelementen statt. Die Faserstoffsuspension wird durch die Umdrehung nach oben gefördert und fällt dann wieder auf den Boden des perforierten Trommelkörpers 22 zurück. Durch den sich drehenden Trommelkörper 22 wird eine kontinuierliche Sortierung der Faserstoffsuspension erreicht. Zur Verdünnung der Faserstoffsuspension mit Wasser ist zumindest ein Spritzrohr 25 mit Düsen vorgesehen, das sich axial entlang des Außenbereichs der Sortiertrommel 20 erstreckt und Wasser in den perforierten Trommelkörper 22 einspeist. Im Innenbereich des Trommelkörpers 12 wird die Faserstoffsuspension durch das eingespeiste Wasser verdünnt, so dass die Fasern von den Störstoffen ausgewaschen werden können. Während der Umdrehungen des Trommelkörpers 22 wird das Wasser entweder an der Innenfläche des Trommelkörpers 22 reflektiert oder es läuft durch die Perforierungen und wird in einem Aufnahmebehälter aufgefangen.

Für eine effiziente Sortierung des Faserstoffs in der Sortiertrommel 20 ist eine Faserstoffdichte von unter 10 % bis 12 % in der Faserstoffsuspension erforderlich. Die anfängliche Stoffdichte der Faserstoffsuspension am Eingangsbereich der Sortiertrommel 20 liegt im Bereich von 18 % bis 24 %. Um eine Reduzierung der anfänglichen Stoffdichte der Faserstoffsuspension innerhalb der Sortiertrommel 20 zu erreichen, die im Bereich von 10 % bis 12 % liegt, ist eine Trommellänge der Sortiertrommel 20 von mehreren Metern erforderlich. Dies bedeutet jedoch, dass der vordere Bereich der Sortiertrommel 20 für die Verdünnung der Faserstoffsuspension verwendet wird, da erst nach dem Erreichen einer akzeptablen Verdünnung die Fasern die Perforationen im Trommelkörper 22 als Gutstoff 23 passieren können. Daher wird die gesamte Fläche der Sortiertrommel 20 nicht optimal genutzt, da erst ab einer Faserstoffdichte von unter 10 % bis 12 % in der Faserstoffsuspension ein Transport der Fasern durch die Perforierungen und damit eine Sortierung der Fasern beginnen kann. Ein erheblicher Teil der Sortiertrommel 20 wird daher nur für die Verdünnung der Fasersuspension verwendet. Zudem wird aufgrund einer unzureichenden Aufnahme des zugeführten Wassers durch die Fasersuspension ein Teil des Wassers im Bodenbereich des perforierten Trommelkörpers 22 wieder ausgeschieden, so dass es ungenutzt einem Auffangbehälter zugeführt werden muss. Dies ist mit einem erhöhten Wasserverbrauch verbunden.

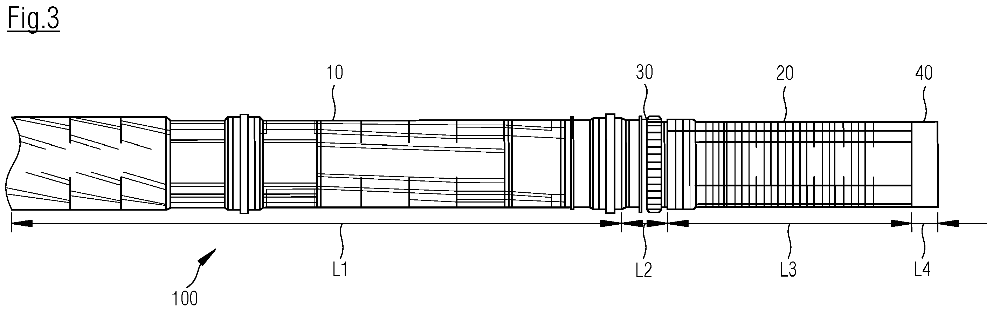

Wie in den Fig. 2 und Fig. 3 dargestellt, ist erfindungsgemäß zwischen der Auflösetrommel 10 und der Sortiertrommel 20 eine Wassereinspeisungstrommel 30 angeordnet. Zudem schließt sich an die Sortiertrommel 20 eine Trocknungstrommel 40 an. Es kann aber auch vorgesehen sein, dass die Wassereinspeisungstrommel 30 als separate Vorrichtung ausgebildet ist, die nicht direkt mit der Auflösetrommel 10 und/oder Sortiertrommel 20 verbunden ist. In diesem Fall wird die aufgelöste Faserstoffsuspension über entsprechend ausgebildete Transportvorrichtungen der Wassereinspeisungstrommel 30 zugeführt.

Wie aus der Fig. 3 hervorgeht, weisen sowohl die Auflösetrommel 10, die Sortiertrommel 20, die Wassereinspeisungstrommel 30 und die Trocknungstrommel 40 vorzugsweise den gleichen Durchmesser auf, der im Bereich von 2,5 bis 4,5 m liegen kann. In einem bevorzugten Ausführungsbeispiel beträgt die Länge L1 der Auflösetrommel 10 beispielsweise 31 m, die Länge L2 der Wassereinspeisungstrommel 30 beträgt beispielsweise 3,5 m, die Länge L3 der Sortiertrommel 20 beträgt beispielsweise 12 m und die Länge L4 der Trocknungstrommel 40 beträgt beispielsweise 1,5 m.

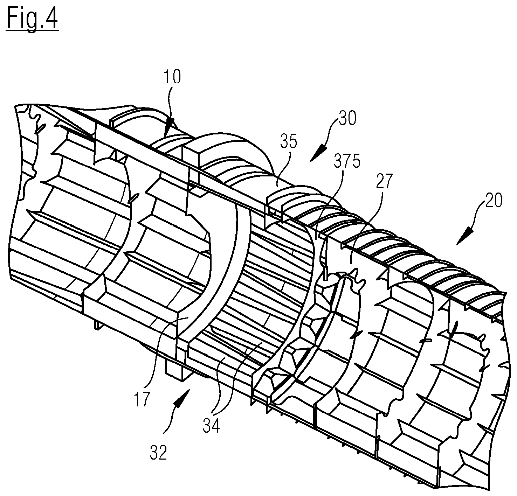

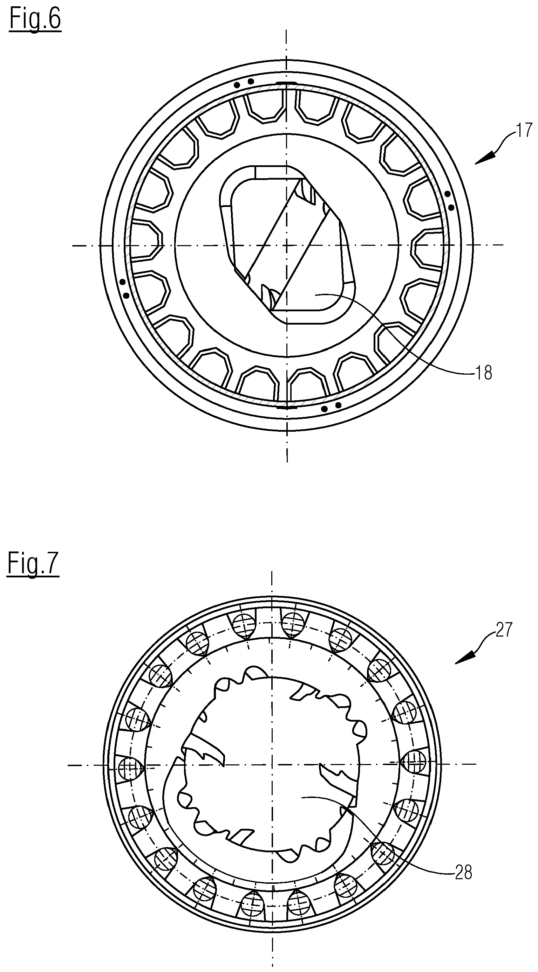

In der Fig. 4 ist die Wassereinspeisungstrommel 30 in einer perspektivischen Innenansicht dargestellt. Die Wassereinspeisungstrommel 30 schließt sich vorzugsweise direkt an die Auflösetrommel 10 an, wobei zwischen der Auflösetrommel 10 und der Wassereinspeisungstrommel 30 eine erste Schottwand 17 vorgesehen ist. In der Fig. 6 ist die erste Schottwand 17 in einer perspektivischen Draufsicht detaillierter dargestellt. Durch eine Durchgangsöffnung 18 der ersten Schottwand 17 fließt die aufgelöste Faserstoffsuspension in einen Eingangsbereich die Wassereinspeisungstrommel 30. Nach dem Eintritt in die Wassereinspeisungstrommel 30 wird der Faserstoffsuspension Wasser zur Verdünnung zugeführt. Hierzu weist die Wassereinspeisungstrommel 30 ein Wasserzuführungssystem 32 auf, das aus einer Mehrzahl von an einer Innenfläche des Außenmantels 35 der Wassereinspeisungstrommel 30 kranzförmig angeordneten Wasserkanälen 34 besteht. Zwischen der Wassereinspeisungstrommel 30 und der Sortiertrommel 20 ist eine zweite Schottwand 27 mit einer Durchgangsöffnung 28 vorgesehen, durch die die mit dem eingespeisten Wasser verdünnte und durchmischte Faserstoffsuspension in die Sortiertrommel 20 fließt. In der Fig. 7 ist die zweite Schottwand 27 in einer perspektivischen Draufsicht detaillierter dargestellt. Insbesondere ist vorgesehen, dass die Durchgangsöffnung 18 der ersten Schottwand 17 größer als die Durchgangsöffnung 28 der zweiten Schottwand 28 ausgebildet ist, da sich durch das zugeführte Wasser das Volumen der Faserstoffsuspension vergrößert.

Das Wasserzuführungssystem 32 umfasst eine Mehrzahl von Wasserkanälen 34, die kranzförmig an der zylinderförmig ausgebildeten Innenfläche 35 der Wassereinspeisungstrommel 30 angeordnet sind. Hierdurch erfolgt die Einspeisung des Wassers gleichmäßig verteilt über die gesamte Innenfläche der Wassereinspeisungstrommel und es kann eine hohe Wasserzufuhr erreicht werden. Insbesondere sind die Wasserkanäle 34 zwischen der ersten Schottwand 17 und einer dritten kreisförmig ausgebildeten Schottwand 375 angeordnet. Hierdurch wird die Stabilität des Wasserzuführungssystems 32 erhöht und vor Verunreinigungen geschützt. Insbesondere ist vorgesehen, dass der Abstand der Wasserkanäle 34 untereinander gleich ist. Es kann aber auch vorgesehen sein, einige Wasserkanäle 34 zu einer Gruppe zusammenzufassen. Ein Wasserkanal 34 weist eine Wasseraufnahmekammer 37 und einen sich daran anschließenden Strömungskanal 38 auf, in den das in die Wasseraufnahmekammer 37 eingespeiste Wasser einströmt. Die Strömungsrichtung des Wassers ist mit Pfeilen A und die Strömungsrichtung der Faserstoffsuspension mit Pfeilen B dargestellt. Der Strömungskanal 38 ist insbesondere U-förmig ausgebildet und weist ein Gefälle auf.

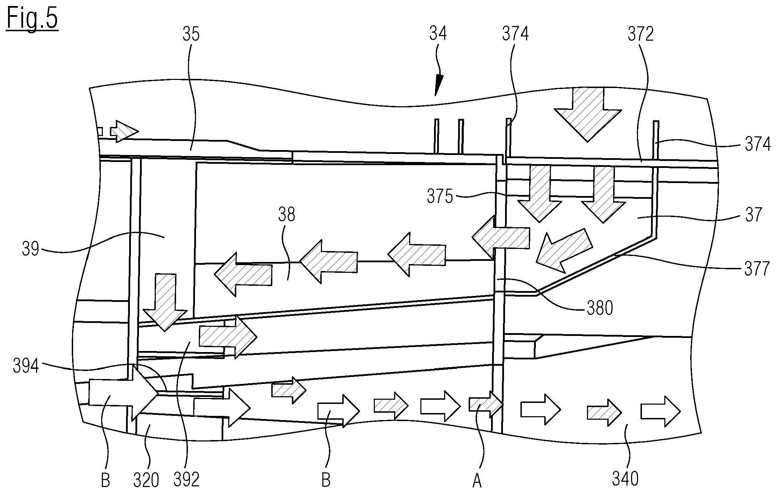

Wie in der Fig. 5 dargestellt, wird das Wasser über ein hier nicht näher dargestelltes Leitungssystem in die Wasseraufnahmekammer 37 eingeleitet. Das Leitungssystem weist vorzugsweise eine Wasserleitung auf, deren Zuleitungsöffnung oberhalb des oberen Umlaufpunktes der zylinderförmigen Wassereinspeisungstrommel 30, der auch als 12-Uhr-Stellung bezeichnet werden kann, angeordnet ist und während der Umdrehung der Wassereinspeisungstrommel 30 jeweils diejenige Wasseraufnahmekammer 37 mit Wasser füllt, die sich im Zuleitungsbereich der Wasserleitung befindet. Für die Zuführung des Wassers weist die Wasseraufnahmekammer 37 einen Perforationsbereich 372 mit Perforationen auf, durch die das Wasser in die Wasseraufnahmekammer 37 wie bei einem Duschvorgang eingeleitet werden kann. Insbesondere ist der Perforationsbereich 372 in gleicher Weise wie der perforierte Außenmantel der Sortiertrommel 20 ausgebildet. Insbesondere ist vorgesehen, dass der Perforationsbereich 372 umlaufend am Außenmantel 35 der Wassereinspeisungstrommel 30 ausgebildet ist. Von dem nicht-perforierten Bereich des Außenmantels 35 der Wassereinspeisungstrommel 30 ist er beidseitig jeweils durch eine Dichtung 374 getrennt, so dass das Wasser sich nicht ungehindert über den Außenmantel 35 der Wassereinspeisungstrommel 30 ausbreiten kann.

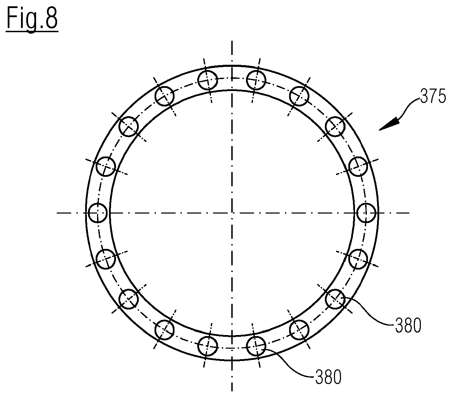

Die Wasseraufnahmekammer 37 ist in einem Ausgangsbereich der Wassereinspeisungstrommel 30 angeordnet. Ein Bodenbereich 377 der Wasseraufnahmekammer 37 ist gegenüber einer axialen Rotationsachse, RA, der Wassereinspeisungstrommel 30 abgeschrägt ausgebildet, so dass eine Umlenkung des Wassers aus einer radialen Richtung in eine axiale Richtung erfolgen kann, um dann in den Strömungskanal 38 zu strömen. Die dritte Schottwand 375 ist zwischen der Wasseraufnahmekammer 37 und dem Strömungskanal 38 vorgesehen und mit Durchgangsöffnungen 380 für die einzelnen kranzförmig angeordneten Strömungskanäle 38 versehen, damit das Wasser jeweils aus der Wasseraufnahmekammer 37 in den Strömungskanal 38 einströmen kann. In der Fig. 8 ist die zweite Schottwand 27 in einer Draufsicht detaillierter dargestellt. Der Strömungskanal 38 weist ein Gefälle auf, um die Strömungsgeschwindigkeit des Wassers zu erhöhen, und fördert nun das Wasser in einer Gegenrichtung zur Strömungsrichtung der Faserstoffsuspension. Der Strömungskanal 38 endet in einem Umlenkungsbereich 39, in dem die Strömungsrichtung des Wassers in die Strömungsrichtung der Faserstoffsuspension umgelenkt wird und das Wasser aus einer Öffnung 392 austritt. Um die Öffnung 392 des Umlenkbereichs 39 vor Verunreinigungen durch die Faserstoffsuspension zu schützen, die zu Verstopfungen der Öffnung 392 führen können, ist ein Schutzelement 394 vorgesehen. Insbesondere kann das Schutzelement 394 ringförmig ausgebildet sein.

Das Wasserzuführungssystem 32 ist somit erfindungsgemäß als eine Art labyrinthförmiges Wassertransportsystem ausgebildet, so dass nicht eine direkte Einspeisung des Wassers in die Faserstoffsuspension erfolgt, sondern erst dann eine Durchmischung der Faserstoffsuspension stattfindet, nachdem das eingespeiste Wasser die Wasseraufnahmekammer 37, den Strömungskanal 38 und den Umlenkbereich 39 durchströmt hat. Hierdurch kann die Strömungsgeschwindigkeit des Wassers deutlich erhöht werden, so dass die Effizienz der Durchmischung gesteigert werden kann. Darüber hinaus wird durch die labyrinthartige Ausbildung des Wasserzuführungssystem 32 verhindert, dass dieses mit der Faserstoffsuspension verunreinigt werden kann, da aufgrund der unterschiedlichen Strömungsrichtungen des zugeführten Wassers und der Faserstoffsuspension ein Zurückströmen der Faserstoffsuspension in die Strömungskanäle 38 wirksam unterbunden wird. Zudem ist der Strömungskanal 38 in Verbindung mit der Umdrehungsgeschwindigkeit der Wassereinspeisungstrommel 30 derart dimensioniert, dass eine axiale Zuführung des in der 12-Uhr-Stellung radial eingespeisten Wassers erst im Bereich einer 3-Uhr-Stellung der Wassereinspeisungstrommel 30 erfolgt, da hierdurch eine effiziente Durchmischung erreicht werden kann.

Die Wassereinspeisung über das erfindungsgemäße Wasserzuführungssystem 32 führt zu einer sofortigen Verdünnung der Auflösestoffdichte der Faserstoffsuspension von 20 % auf eine Sortierstoffdichte von 10-12 %. Der Faserverlust im Gutstoff 23 werden dabei deutlich reduziert. Zudem verringert sich durch die niedrige Stoffdichte der spezifische Energieverbrauch und der Einsatz von Chemikalien kann erheblich reduziert werden.

In einer weiteren Ausbildung kann vorgesehen sein, die Temperatur des eingespeisten Wassers an die Konsistenz und Beschaffenheit der jeweiligen Faserstoffsuspension anzupassen, um hierdurch eine effiziente Durchmischung zu steuern.

Mit der vorliegenden Erfindung ist es möglich, für die Verdünnung der Faserstoffsuspension auf eine Sortierstoffdichte von 10-12 % nur eine Trommellänge von ungefähr 3,5 m zu benötigen, so dass in der nachfolgenden Sortiertrommel 20 die Sortierung bereits in einem vorderen Bereich starten kann. Somit kann die gesamte Länge der Sortiertrommel 20 deutlich effizienter genutzt werden, so dass die Ausbeute an verwertbaren Fasern gesteigert werden kann. Zusätzlich zu der Verdünnung und Durchmischung in der Wassereinspeisungstrommel 30 kann eine weitere Verdünnung der Faserstoffsuspension in der Sortiertrommel 20 durch das durch das Sprührohr 25 zugeführte Wasser erfolgen.

Durch die erfindungsgemäße Wassereinspeisungstrommel 30 wird der Sortierungsprozess der Faserstoffsuspension deutlich verbessert, da bereits in einem frühen Verfahrensstadium eine Verdünnung der Faserstoffsuspension auf eine Sortierstoffdichte in einem Bereich von 10-12% erfolgen kann.

Insbesondere ist es möglich, bei einer Faserstoffaufbereitungsvorrichtung 100eine deutlich längere Transportstrecke für die eigentliche Sortierung in der Sortiertrommel 20 zu nutzen, da der vordere Bereich der Sortiertrommel 20 für die Verdünnung und Durchmischung der Faserstoffsuspension in einen Sortierstoffdichtebereich von 10-12% nicht verwendet wird. Es ist aber auch möglich, die Trommellänge der Sortiertrommel 20 einer Faserstoffaufbereitungsvorrichtung zu verkürzen, um hierdurch Material und Kosten einzusparen. Insbesondere ist es möglich, mit der erfindungsgemäßen Wassereinspeisungstrommel 30 und der Faserstoffaufbereitungsvorrichtung 100 auch sehr große Tonnagen im Bereich von mehr als 2000 Tonnen pro Tag sicher und effizient zu bearbeiten.

### Bezugszeichen

- 10: Auflösetrommel
- 12: Trommelkörper
- 14: Eingangsbereich
- 17: erste Schottwand
- 18: Durchgangsöffnung
- 20: Sortiertrommel
- 22: Trommelkörper
- 23: Gutstoff
- 24: Rejekt
- 25: Spritzrohr
- 27: zweite Schottwand
- 28: Durchgangsöffnung
- 30: Wassereinspeisungstrommel
- 32: Wasserzuführungssystem
- 34: Wasserkanal
- 35: Außenmantel
- 37: Wasseraufnahmekammer
- 38: Strömungskanal
- 39: Umlenkbereich
- 40: Trocknungstrommel
- 100: Faserstoffaufbereitungsvorrichtung
- 320: Eingangsbereich
- 340: Ausgangsbereich
- 372: Perforationsbereich
- 374: Dichtung
- 375: dritte Schottwand
- 377: Bodenbereich der Wasseraufnahmekammer
- 380: Durchgangsöffnungen in der dritten Schottwand
- 392: Öffnung
- 394: Schutzelement

## Patentansprüche

1. Wassereinspeisungstrommel (30) mit einem Wasserzuführungssystem (32) zum Durchmischen einer vorzugsweise in einer Auflösetrommel (10) aufgelösten Faserstoffsuspension mit eingespeistem Wasser, wobei die Faserstoffsuspension insbesondere Faserstoff mit hohen Stoffdichten im HC-Bereich wie Altpapier enthält und in einem Eingangsbereich (320) in die Wassereinspeisungstrommel (30) einströmbar ist, **wobei** das Wasserzuführungssystem (32) zumindest einen Wasserkanal (34) mit einer Wasseraufnahmekammer (37) und einem sich an die Wasseraufnahmekammer (37) anschließenden Strömungskanal (38) umfasst, wobei die Wasseraufnahmekammer (37) in einem Ausgangsbereich (340) angeordnet ist und der Strömungskanal (38) in einen Umlenkbereich (39) mündet, wodurch ein labyrinthartiges Wassertransportsystem ausgebildet ist, in dem das Wasser aus der Wasseraufnahmekammer (37) in den Strömungskanal (38) fließt, durch den Strömungskanal (38) in einer Gegenrichtung zur Strömungsrichtung der Faserstoffsuspension strömt und in dem Umlenkungsbereich (39) in die Strömungsrichtung der Faserstoffsuspension umgelenkt wird.

2. Wassereinspeisungstrommel (30) nach Anspruch 1, wobei der Strömungskanal (38) U-förmig ausgebildet ist und ein Gefälle gegenüber einer axialen Rotationsachse (RA) der Wassereinspeisungstrommel (30) aufweist.

3. Wassereinspeisungstrommel (30) nach Anspruch 1 oder 2, wobei die Wasseraufnahmekammer (37) für die Zuführung des Wassers einen Perforationsbereich (372) mit Perforationen aufweist, durch welche das Wasser in die Wasseraufnahmekammer (37) radial eingeleitet werden kann.

4. Wassereinspeisungstrommel (30) nach einem der Ansprüche 1 bis 3, wobei ein Bodenbereich (377) der Wasseraufnahmekammer (37) gegenüber der axialen Rotationsachse (RA) der Wassereinspeisungstrommel (30) abgeschrägt ausgebildet ist, so dass eine Umlenkung des Wassers aus einer radialen Richtung in eine axiale Richtung erfolgen kann.

5. Wassereinspeisungstrommel (30) nach einem der Ansprüche 1 bis 4, wobei ein Schutzelement (394) vorgesehen ist, um die Öffnung (392) des Umlenkbereichs (39) vor Verunreinigungen durch die Faserstoffsuspension zu schützen.

6. Wassereinspeisungstrommel (30) nach einem der Ansprüche 1 bis 5, wobei das Wasserzuführungssystem (32) eine Mehrzahl von Wasserkanälen (34) aufweist, die kranzförmig an einer Innenfläche eines Außenmantels (35) der Wassereinspeisungstrommel (30) angeordnet sind.

7. Wassereinspeisungstrommel (30) nach einem der Ansprüche 1 bis 6, wobei eine erste Schottwand (17) mit einer Durchgangsöffnung (18) für die in die Wassereinspeisungstrommel (30) einströmende Faserstoffsuspension und eine zweite Schottwand (27) mit einer Durchgangsöffnung (28) für die ausströmende Faserstoffsuspension vorgesehen ist.

8. Wassereinspeisungstrommel (30) nach einem der Ansprüche 1 bis 7, wobei die Wasserkanäle (34) zwischen der ersten Schottwand (17) und einer dritten kreisförmig ausgebildeten Schottwand (375) angeordnet sind.

9. Faserstoffaufbereitungsvorrichtung (100) zum Auflösen und Sortieren von Faserstoffen, insbesondere Faserstoff mit hohen Stoffdichten im HC-Bereich wie Altpapier, umfassend zumindest eine Auflösetrommel (10) mit einem Trommelkörper (12) zum Auflösen von Faserstoff in einer Faserstoffsuspension und eine mit der Auflösetrommel (10) direkt oder indirekt gekoppelte Sortiertrommel (20) mit einem zumindest teilweise perforierten Trommelkörper (22) zum anschließenden Sortieren der Faserstoffsuspension zur Trennung in einen Gutstoff (23) und in ein Rejekt (24), **wobei** zwischen der Auflösetrommel (10) und der Sortiertrommel (20) eine Wassereinspeisungstrommel (30) mit einem Wasserzuführungssystem (32) angeordnet ist zur Durchmischung der in der Auflösetrommel (10) aufgelösten Faserstoffsuspension mit eingespeistem Wasser, wobei das Wasserzuführungssystem (32) zumindest einen Wasserkanal (34) mit einer Wasseraufnahmekammer (37) und einem sich an die Wasseraufnahmekammer (37) anschließenden Strömungskanal (38) umfasst, wobei die Wasseraufnahmekammer (37) in einem Ausgangsbereich (340) angeordnet ist und der Strömungskanal (38) in einen Umlenkbereich (39) mündet, wodurch ein labyrinthartiges Wassertransportsystem ausgebildet ist, in dem das Wasser aus der Wasseraufnahmekammer (37) in den Strömungskanal (38) fließt, durch den Strömungskanal (38) in einer Gegenrichtung zur Strömungsrichtung der Faserstoffsuspension strömt und in dem Umlenkungsbereich (39) in die Strömungsrichtung der Faserstoffsuspension umgelenkt wird.

10. Faseraufbereitungsvorrichtung nach Anspruch 9, wobei der Strömungskanal (38) U-förmig ausgebildet ist und ein Gefälle gegenüber einer axialen Rotationsachse (RA) der Wassereinspeisungstrommel (30) aufweist.

11. Faserstoffaufbereitungsvorrichtung (100) nach Anspruch 9 oder 10, wobei die Wasseraufnahmekammer (37) für die Zuführung des Wassers einen Perforationsbereich (372) mit Perforationen aufweist, durch welche das Wasser in die Wasseraufnahmekammer (37) radial eingeleitet werden kann, und wobei die Ausbildung des Perforationsbereich (372) der Ausbildung des perforierten Außenmantels der Sortiertrommel (20) entspricht.

12. Faserstoffaufbereitungsvorrichtung (100) nach einem der Ansprüche 9 bis 11, wobei ein Bodenbereich (377) der Wasseraufnahmekammer (37) gegenüber der axialen Rotationsachse (RA) der Wassereinspeisungstrommel (30) abgeschrägt ausgebildet ist, so dass eine Umlenkung des Wassers aus einer radialen Richtung in eine axiale Richtung erfolgen kann.

13. Faserstoffaufbereitungsvorrichtung (100) nach einem der Ansprüche 9 bis12, wobei ein Schutzelement (394) vorgesehen ist, um die Öffnung (392) des Umlenkbereichs (39) vor Verunreinigungen durch die Faserstoffsuspension zu schützen.

14. Faserstoffaufbereitungsvorrichtung (100) nach einem der Ansprüche 9 bis 13, wobei das Wasserzuführungssystem (32) eine Mehrzahl von Wasserkanälen (34) aufweist, die kranzförmig an einer Innenfläche eines Außenmantels (35) der Wassereinspeisungstrommel (30) angeordnet sind.

15. Faserstoffaufbereitungsvorrichtung (100) nach einem der Ansprüche 9 bis 14, wobei zwischen der Auflösetrommel (10) und der Wassereinspeisungstrommel (30) eine erste Schottwand (17) mit einer Durchgangsöffnung (18) für die in die Wassereinspeisungstrommel (30) einströmende Faserstoffsuspension vorgesehen ist, wobei zwischen der Wassereinspeisungstrommel (30) und der Sortiertrommel (20) eine zweite Schottwand (27) mit einer Durchgangsöffnung (28) für die in die Sortiertrommel (20) ausströmende Faserstoffsuspension vorgesehen ist, und wobei die Wasserkanäle (34) zwischen der ersten Schottwand (17) und einer dritten kreisförmig ausgebildeten Schottwand (375) angeordnet sind.

## Claims

1. Water feed drum (30) with a water supply system (32) for mixing a fibrous suspension, preferably pulped in a pulping drum (10), with the water which is fed in, wherein the fibrous suspension contains, in particular, fibrous material with high material densities in the HC range, such as waste paper, and can flow into the water feed drum (30) in an inlet region (320), wherein the water supply system (32) comprises at least one water channel (34) with a water intake chamber (37) and a flow channel (38) adjoining the water intake chamber (37), wherein the water intake chamber (37) is arranged in an outlet region (340) and the flow channel (38) opens into a deflection region (39), whereby a labyrinth-like water transport system is formed, in which the water flows from the water intake chamber (37) into the flow channel (38), flows through the flow channel (38) in a direction contrary to the flow direction of the fibrous suspension and is deflected in the flow direction of the fibrous suspension in the deflection region (39).

2. Water feed drum (30) according to Claim 1, wherein the flow channel (38) is of U-shaped form and has an incline with respect to an axial axis of rotation (RA) of the water feed drum (30).

3. Water feed drum (30) according to Claim 1 or 2, wherein, for supplying the water, the water intake chamber (37) has a perforation region (372) with perforations through which the water can be introduced radially into the water intake chamber (37).

4. Water feed drum (30) according to one of Claims 1 to 3, wherein a base region (377) of the water intake chamber (37) is of chamfered form with respect to the axial axis of rotation (RA) of the water feed drum (30) so that a deflection of the water from a radial direction into an axial direction can take place.

5. Water feed drum (30) according to one of Claims 1 to 4, wherein a protective element (394) is provided in order to protect the opening (392) of the deflection region (39) from contamination by the fibrous suspension.

6. Water feed drum (30) according to one of Claims 1 to 5, wherein the water supply system (32) has a plurality of water channels (34) which are arranged in a ring shape on an inner surface of an outer jacket (35) of the water feed drum (30).

7. Water feed drum (30) according to one of Claims 1 to 6, wherein a first partition wall (17), having a passage opening (18) for the fibrous suspension flowing into the water feed drum (30), and a second partition wall (27), having a passage opening (28) for the fibrous suspension flowing out, are provided.

8. Water feed drum (30) according to one of Claims 1 to 7, wherein the water channels (34) are arranged between the first partition wall (17) and a third circular partition wall (375).

9. Fibrous material preparation device (100) for pulping and screening fibrous materials, in particular fibrous material with high material densities in the HC range, such as waste paper, comprising at least one pulping drum (10) with a drum body (12) for pulping fibrous material in a fibrous suspension and a screening drum (20) coupled directly or indirectly to the pulping drum (10) with an at least partially perforated drum body (22) for subsequent screening of the fibrous suspension for separation into an accepted material (23) and into a reject (24), wherein a water feed drum (30) with a water supply system (32) is arranged between the pulping drum (10) and the screening drum (20) for mixing the fibrous suspension pulped in the pulping drum (10) with the water which is fed in, wherein the water supply system (32) comprises at least one water channel (34) with a water intake chamber (37) and a flow channel (38) adjoining the water intake chamber (37), wherein the water intake chamber (37) is arranged in an outlet region (340) and the flow channel (38) opens into a deflection region (39), whereby a labyrinth-like water transport system is formed, in which the water flows from the water intake chamber (37) into the flow channel (38), flows through the flow channel (38) in a direction contrary to the flow direction of the fibrous suspension and is deflected in the flow direction of the fibrous suspension in the deflection region (39).

10. Fibre preparation device according to Claim 9, wherein the flow channel (38) is of U-shaped form and has an incline with respect to an axial axis of rotation (RA) of the water feed drum (30).

11. Fibrous material preparation device (100) according to Claim 9 or 10, wherein, for supplying the water, the water intake chamber (37) has a perforation region (372) with perforations through which the water can be introduced radially into the water intake chamber (37), and wherein the design of the perforation region (372) corresponds to the design of the perforated outer jacket of the screening drum (20).

12. Fibrous material preparation device (100) according to one of Claims 9 to 11, wherein a base region (377) of the water intake chamber (37) is of chamfered form with respect to the axial axis of rotation (RA) of the water feed drum (30) so that a deflection of the water from a radial direction into an axial direction can take place.

13. Fibrous material preparation device (100) according to one of Claims 9 to 12, wherein a protective element (394) is provided in order to protect the opening (392) of the deflection region (39) from contamination by the fibrous suspension.

14. Fibrous material preparation device (100) according to one of Claims 9 to 13, wherein the water supply system (32) has a plurality of water channels (34) which are arranged in a ring shape on an inner surface of an outer jacket (35) of the water feed drum (30).

15. Fibrous material preparation device (100) according to one of Claims 9 to 14, wherein a first partition wall (17), having a passage opening (18) for the fibrous suspension flowing into the water feed drum (30), is provided between the pulping drum (10) and the water feed drum (30), wherein a second partition wall (27), having a passage opening (28) for the fibrous suspension flowing out into the screening drum (20), is provided between the water feed drum (30) and the screening drum (20), and wherein the water channels (34) are arranged between the first partition wall (17) and a third circular partition wall (375).

## Revendications

1. Tambour d'alimentation en eau (30) comprenant un système d'amenée d'eau (32) destiné à mélanger une suspension de fibres, de préférence désintégrée dans un tambour de désintégration (10), avec de l'eau introduite, la suspension de fibres contenant notamment des fibres à forte consistance, dans la plage HC, telles que des vieux papiers, et pouvant pénétrer dans le tambour d'alimentation en eau (30) par une zone d'entrée (320), le système d'amenée d'eau (32) comprenant au moins un canal d'eau (34) comportant une chambre de réception d'eau (37) et un canal d'écoulement (38) faisant suite à la chambre de réception d'eau (37), la chambre de réception d'eau (37) étant disposée dans une zone de sortie (340) et le canal d'écoulement (38) débouchant dans une zone de déviation (39), de manière à former un système de transport d'eau en labyrinthe dans lequel l'eau s'écoule de la chambre de réception d'eau (37) vers le canal d'écoulement (38), circule dans le canal d'écoulement (38) dans un sens opposé au sens d'écoulement de la suspension de fibres, puis est déviée, dans la zone de déviation (39), dans le sens d'écoulement de la suspension de fibres.

2. Tambour d'alimentation en eau (30) selon la revendication 1, dans lequel le canal d'écoulement (38) présente une forme en U et une pente par rapport à un axe de rotation axial (RA) du tambour d'alimentation en eau (30).

3. Tambour d'alimentation en eau (30) selon la revendication 1 ou 2, dans lequel la chambre de réception d'eau (37) présente, pour l'amenée d'eau, une zone perforée (372) comportant des perforations à travers lesquelles l'eau peut être introduite radialement dans la chambre de réception d'eau (37).

4. Tambour d'alimentation en eau (30) selon l'une des revendications 1 à 3, dans lequel une zone de fond (377) de la chambre de réception d'eau (37) est inclinée par rapport à l'axe de rotation axial (RA) du tambour d'alimentation en eau (30), de sorte que l'eau peut être déviée d'une direction radiale vers une direction axiale.

5. Tambour d'alimentation en eau (30) selon l'une des revendications 1 à 4, dans lequel un élément de protection (394) est prévu pour protéger l'ouverture (392) de la zone de déviation (39) contre les impuretés provenant de la suspension de fibres.

6. Tambour d'alimentation en eau (30) selon l'une des revendications 1 à 5, dans lequel le système d'amenée d'eau (32) comporte une pluralité de canaux d'eau (34) disposés en couronne sur une surface intérieure d'une enveloppe extérieure (35) du tambour d'alimentation en eau (30).

7. Tambour d'alimentation en eau (30) selon l'une des revendications 1 à 6, dans lequel sont prévues une première cloison (17) comportant une ouverture de passage (18) pour la suspension de fibres entrant dans le tambour d'alimentation en eau (30) et une seconde cloison (27) comportant une ouverture de passage (28) pour la suspension de fibres sortante.

8. Tambour d'alimentation en eau (30) selon l'une des revendications 1 à 7, dans lequel les canaux d'eau (34) sont disposés entre la première cloison (17) et une troisième cloison (375) de forme circulaire.

9. Dispositif de préparation de matières fibreuses (100) destiné à désintégrer et à trier des matières fibreuses, notamment des matières fibreuses à forte consistance dans la plage HC, telles que des vieux papiers, comprenant au moins un tambour de désintégration (10) doté d'un corps de tambour (12) destiné à désintégrer des matières fibreuses dans une suspension de fibres, et un tambour de tri (20), couplé directement ou indirectement au tambour de désintégration (10), doté d'un corps de tambour (22) au moins partiellement perforé et destiné à trier ensuite la suspension de fibres pour la séparer en une fraction acceptée (23) et une fraction rejetée (24), un tambour d'alimentation en eau (30) doté d'un système d'amenée d'eau (32) étant disposé entre le tambour de désintégration (10) et le tambour de tri (20) afin de mélanger la suspension de fibres désintégrée dans le tambour de désintégration (10) avec de l'eau introduite, le système d'amenée d'eau (32) comprenant au moins un canal d'eau (34) comportant une chambre de réception d'eau (37) et un canal d'écoulement (38) faisant suite à la chambre de réception d'eau (37), la chambre de réception d'eau (37) étant disposée dans une zone de sortie (340) et le canal d'écoulement (38) débouchant dans une zone de déviation (39), de manière à former un système de transport d'eau en labyrinthe dans lequel l'eau s'écoule de la chambre de réception d'eau (37) vers le canal d'écoulement (38), circule dans le canal d'écoulement (38) dans un sens opposé au sens d'écoulement de la suspension de fibres, puis est déviée, dans la zone de déviation (39), dans le sens d'écoulement de la suspension de fibres.

10. Dispositif de préparation de matières fibreuses selon la revendication 9, dans lequel le canal d'écoulement (38) présente une forme en U et une pente par rapport à un axe de rotation axial (RA) du tambour d'alimentation en eau (30).

11. Dispositif de préparation de matières fibreuses (100) selon la revendication 9 ou 10, dans lequel la chambre de réception d'eau (37) présente, pour l'amenée d'eau, une zone perforée (372) comportant des perforations à travers lesquelles l'eau peut être introduite radialement dans la chambre de réception d'eau (37), et dans lequel la configuration de la zone perforée (372) correspond à celle de l'enveloppe extérieure perforée du tambour de tri (20).

12. Dispositif de préparation de matières fibreuses (100) selon l'une des revendications 9 à 11, dans lequel une zone de fond (377) de la chambre de réception d'eau (37) est inclinée par rapport à l'axe de rotation axial (RA) du tambour d'alimentation en eau (30), de sorte que l'eau peut être déviée d'une direction radiale vers une direction axiale.

13. Dispositif de préparation de matières fibreuses (100) selon l'une des revendications 9 à 12, dans lequel un élément de protection (394) est prévu pour protéger l'ouverture (392) de la zone de déviation (39) contre les impuretés provenant de la suspension de fibres.

14. Dispositif de préparation de matières fibreuses (100) selon l'une des revendications 9 à 13, dans lequel le système d'amenée d'eau (32) comporte une pluralité de canaux d'eau (34) disposés en couronne sur une surface intérieure d'une enveloppe extérieure (35) du tambour d'alimentation en eau (30).

15. Dispositif de préparation de matières fibreuses (100) selon l'une des revendications 9 à 14, dans lequel une première cloison (17) comportant une ouverture de passage (18) pour la suspension de fibres entrant dans le tambour d'alimentation en eau (30) est prévue entre le tambour de désintégration (10) et le tambour d'alimentation en eau (30), une deuxième cloison (27) comportant une ouverture de passage (28) pour la suspension de fibres sortant dans le tambour de tri (20) est prévue entre le tambour d'alimentation en eau (30) et le tambour de tri (20), et les canaux d'eau (34) sont disposés entre la première cloison (17) et une troisième cloison (375) de forme circulaire.
